# EUROPÄISCHE PATENTSCHRIFT

(11) **EP 3 538 308 B1**
(45) Veröffentlichungstag und Bekanntmachung des Hinweises auf die Patenterteilung: **09.09.2020**
(21) Anmeldenummer: 17828840.3
(22) Anmeldetag: 07.11.2017
(51) Int. Cl.: B23B 41/00, B23B 41/10, B23B 31/26, F22B 37/00

(54) **BOHRVORRICHTUNG FÜR DAS BEARBEITEN VON ROHREN AN ROHRBÖDEN VON WÄRMETAUSCHERN IN RADIOAKTIVER UMGEBUNG**
DRILLING APPARATUS FOR MACHINING TUBES ON TUBE SHEETS OF HEAT EXCHANGERS IN RADIOACTIVE ENVIRONMENT
DISPOSITIF DE PERÇAGE POUR L'USINAGE DE TUBES SUR PLAQUE DE TUBES D'ÉCHANGEURS THERMIQUES EN ENVIRONNEMENT RADIOACTIF

(30) Priorität: 08.11.2016 DE 102016013247
(43) Veröffentlichungstag der Anmeldung: 18.09.2019
(73) Patentinhaber: Westinghouse Electric Germany GmbH, 68167 Mannheim (DE)
(72) Erfinder: ZIEGELMEYER, Fritz, 76669 Bad Schönborn (DE)
(74) Vertreter: Eickmeyer, Dietmar
(86) Internationale Anmeldenummer: PCT/EP2017/001291
(87) Internationale Veröffentlichungsnummer: WO 2018/086733

(56) Entgegenhaltungen:
- EP-A1- 0 480 382
- DE-A1- 3 840 569
- DE-A1- 4 029 978

## Beschreibung

Die Erfindung betrifft eine Bohrvorrichtung für das Bearbeiten von Rohren an Rohrböden von Wärmetauschern in radioaktiver Umgebung nach dem Oberbegriff des Anspruches 1 und wie aus der EP 0 480 382 A1 bekannt.

In Kernkraftwerken werden in regelmäßigen Abständen Wartungsarbeiten und gegebenenfalls Reparaturen durchgeführt. Dabei gibt es Bereiche im Kernkraftwerk, die radioaktiver Strahlung ausgesetzt sind und nach einer gewissen Zeit selbst radioaktive Strahlung abgeben. Auch in dieser radioaktiven Umgebung sind Wartungsarbeiten und Reparaturen durchzuführen, zum Beispiel an Dampferzeuger- oder Wärmetauscherrohren. Für Personen ist die radioaktive Umgebung ungeeignet und allenfalls kurzzeitig zugänglich. Zudem erfordern rechtliche Vorgaben, dass eine Strahlenbelastung von Personal und Material möglichst gering ist und eine bestimmte Obergrenze nicht überschreiten darf. In diesen Bereichen kommen auch fernbedienbare Werkzeugmaschinen oder Prüfeinrichtungen zum Einsatz.

Für die Reparatur von Rohren, die in Rohrböden gehalten sind, ist es möglich, eine Bohrmaschine auf einen Roboterarm eines Roboters anzubringen und die Bohrmaschine dann mit einem Roboterarm an die zu bearbeitende Stelle in der radioaktiven Umgebung zu bewegen, wie es in de US6282461B1 gezeigt ist. Bei der Bearbeitung kann es vorkommen, dass der in die Bohrmaschine eingesetzte Bohrer oder Fräser stumpf oder beschädigt wird, sodass das Werkzeug gewechselt werden muss. Hierfür verbringt der Roboter die Bohrmaschine zu einem Mannloch im Wärmetauscher. Dort wird die Bohrmaschine vom Roboter gelöst und ein Mitarbeiter übernimmt diese für den Werkzeugwechsel. Anschließend wird die Bohrmaschine wieder dem Roboter übergeben, der die Werkzeugmaschine zurück an die zu bearbeitende Stelle bringt.

Nachteilig bei diesem Vorgehen ist es, dass ein Werkzeugwechsel vergleichsweise aufwendig ist, lange dauert und zudem das Personal, das den Werkzeugwechsel durchführt, einer unerwünschten Strahlenbelastung aussetzt.

Ausgehend von diesem Stand der Technik ist es Aufgabe der Erfindung, eine Bohrvorrichtung anzugeben, und mit der ein Werkzeugwechsel vereinfacht wird und zudem die Strahlenbelastung für das Personal des Werkzeugwechsels verringert.

Die Aufgabe wird gelöst durch eine Bohrvorrichtung nach Anspruch 1.

Die erfindungsgemäße Bohrvorrichtung für das Bearbeiten von Rohren an Rohrböden von Wärmetauschern in radioaktiver Umgebung ist mit den wenigstens zwei Haltefingern in den Rohren des zu bearbeitenden Wärmetauschers verklemmbar. Bei einem Werkzeugwechsel kann die Bohrvorrichtung in vorteilhafter Weise am Rohrboden verbleiben. Bei einer erfindungsgemäßen Bohrvorrichtung ist in vorteilhafter Weise auch sichergestellt, dass das Bohrfutter von der Werkzeugwelle fernbedient entriegelbar ist, ohne dass die Bohrvorrichtung vom Rohrboden gelöst ist. Dabei wird beispielsweise das Bohrfutter mit seinem Werkzeug, zum Beispiel einem Bohrer oder Fräser, von einem Greifwerkzeug gegriffen und von der Bohrvorrichtung entfernt. Ein Bohrfutter mit einem neuen Werkzeug kann anschließend mit dem fernbedienbaren Greifwerkzeug wieder an die Werkzeugwelle herangeführt werden. Das Entwicklungsgerät hebt dann die Entriegelung auf und das neue Werkzeugfutter ist mit der Antriebswelle verbunden. Damit entfällt in vorteilhafter Weise das Lösen der Bohrvorrichtung vom Rohrboden, der Transport der Bohrvorrichtung zum Mannloch sowie die damit verbundene Strahlenbelastung des Personals bei der Entnahme der Bohrvorrichtung zum Werkzeugwechsel. Der Werkzeugwechsel ist zudem vereinfacht und schneller als bisher möglich. Die Fernbedienvorrichtung ist dabei als separates Gerät realisierbar. Es ist aber auch innerhalb des Erfindungsgedankens, dass die Fernbedienvorrichtung in eine Steuerung der Bohrvorrichtung integriert ist. Zudem werden auch die Dampferzeuger eines Kernkraftwerkes als Wärmetauscher betrachtet.

Eine vorteilhafte Ausgestaltung des Erfindungsgegenstandes sieht vor, dass auf der ersten Seite Distanzelemente angeordnet sind. Die erste Seite weist zudem zu bearbeiten Rohrboden. Durch die Distanzelemente wird sichergestellt, dass die Halteplatte an genau definierten Punkten mit dem zu bearbeitenden Rohrboden in Kontakt ist. Auf diese Weise ist die Halteplatte parallel zum Rohrboden angeordnet.

Zudem ist es vorteilhaft, wenn auf der ersten Seite ein Detektor, insbesondere ein Endschalter, angeordnet ist, mit dem eine Lageveränderung der Halteplatte relativ zu einem Rohrboden feststellbar ist. Während des Betriebes der Bohrvorrichtung kann es vorkommen, dass sich durch die von der Bearbeitung des Rohrbodens verursachten Vibrationen die Position der Haltefinger in den Rohren des Rohrbodens verändern. Die Halteplatte liegt dann gegebenenfalls nicht mehr an den Rohrboden an, so dass das Bearbeitungswerkzeug einem höheren Verschleiß unterliegt oder es zu Materialschäden kommen kann. Der Detektor erkennt die veränderte Position der Halteplatte, sodass die Bearbeitung unterbrochen werden kann, bis sich die Halteplatte wieder in einer korrekten Position befindet. Idealerweise ist der Detektor ein Endschalter, der eine gleiche Länge aufweist wie die Distanzelemente, sodass jegliche Abstandsänderung zwischen den Distanzelementen und im Rohrboden einen Schaltvorgang, insbesondere das Abschalten der Bearbeitung, bewirkt.

Eine besonders vorteilhafte Ausgestaltung der Bohrvorrichtung ist erreicht, in dem das Entriegelungsgerät eine Verriegelungsvorrichtung, ein Betätigungselement und eine Betätigungsvorrichtung aufweist, dass an einer zweiten Stirnseite der Hohlwelle die Verriegelungsvorrichtung zumindest teilweise in der Hohlwelle angeordnet und mit dieser verbunden ist, dass das Betätigungselement durch die Verriegelungsvorrichtung durchgeführt ist, dass das Betätigungselement von einer Betätigungsvorrichtung von einer Verriegelungsposition zumindest zeitweise in eine Entriegelungsposition verbringbar ist und dass das Werkzeugfutter in der Verriegelungsposition von der Werkzeugwelle angetrieben ist.

Mit einem derart ausgestalteten Entriegelungsgerät ist eine robuste und wenig störanfällige Entriegelung für das Werkzeugfutter erreicht. Als Werkzeugfutter kommen insbesondere Pendelhalter in Betracht, die als Ausgleichsfutter selbstzentrierend wirken und auch eine Achsenverschiebung bzw. einen Achsversatz zwischen einer Bohrungsmitte und der Achsposition der Antriebswelle zulassen.

Die erfindungsgemäße Bohrvorrichtung wird vereinfacht, wenn die Verriegelungsvorrichtung ein Federelement aufweist, durch dessen Federkräfte das Betätigungselement in der Verriegelungsposition gehalten ist. Auf diese Weise ist sichergestellt, dass auch bei Ausfall von Hilfsenergien das Werkzeugfutter mit der Werkzeugwelle verriegelt ist.

Eine weitere Ausgestaltung des Erfindungsgegenstandes sieht vor, dass durch das Betätigungselement in der Verriegelungsposition mehrere Kugeln in einer Nut des Werkzeugfutters gehalten sind und dass durch die Kugeln das Werkzeugfutter in axialer Richtung fixiert ist. Auf diese Weise ist das Werkzeug in axialer Richtung der Werkzeugwelle fixiert, so dass ein besonders genaues Arbeiten mit vernachlässigbarem Spiel ermöglicht ist. Der Art ist auch ein besonders genaues Arbeiten mit Vorschub ermöglicht.

Eine Fortbildung der Bohrvorrichtung ist erreicht, wenn das Betätigungselement ein Betätigungsbolzen ist, der eine Kappe aufweist, dass ein Entriegelungselement der Betätigungsvorrichtung zum Entriegeln mit der Kappe zusammenarbeitet, so dass die Kappe zusammen dem mit dem Betätigungsbolzen in axialer Richtung der Werkzeugwelle bewegt ist. Das Entriegeln ist mit dieser Fortbildung besonders zuverlässig möglich.

Ein weiterer Vorteil wird erreicht, wenn das Entriegelungselement als Hohlzylinder ausgestaltet ist, durch den der Betätigungsbolzen durchgreift, und dass die Maße des Betätigungsbolzens so auf das Entriegelungselement abgestimmt sind, dass Betätigungsbolzen und Hohlzylinder in der Verriegelungsposition berührungsfrei sind. Hierdurch wird ein Verschleiß des Betätigungsbolzen sowie Hohlzylinders durch die Drehbewegung des Betätigungsbolzens im Betrieb vermieden.

Eine vorteilhafte Bohrvorrichtung kennzeichnet sich auch dadurch, dass eine Steuerungsvorrichtung mit dem ersten Antrieb und/oder mit dem zweiten Antriebe und/oder mit der Vorschubvorrichtung und/oder mit dem Entriegelungsgerät verbunden ist. Grundsätzlich können auch alle Antriebe, der Vorschub oder das Entriegelung Gerät auch manuell bedient werden. Die Steuerungsvorrichtung hat den Vorteil, dass bestimmte Betriebslogiken in der Steuerung abgebildet werden können, zum Beispiel das automatische Ausschalten, wenn der Detektor ein Signal abgibt, dass die Position der Halteplatte sich relativ zum Rohrboden verändert hat.

Weitere vorteilhafte Ausgestaltungsmöglichkeiten sind den weiteren abhängigen Ansprüchen zu entnehmen.

Anhand des in den Zeichnungen dargestellten Ausführungsbeispiels sollen die Erfindung, weitere Ausführungsformen und weitere Vorteile näher beschrieben werden.

Es zeigen
- Fig. 1: eine Seitenansicht auf eine exemplarische Fräs-/Bohrvorrichtung sowie
- Fig. 2: einen Schnitt durch eine Teil der Fräs-/Bohrvorrichtung.

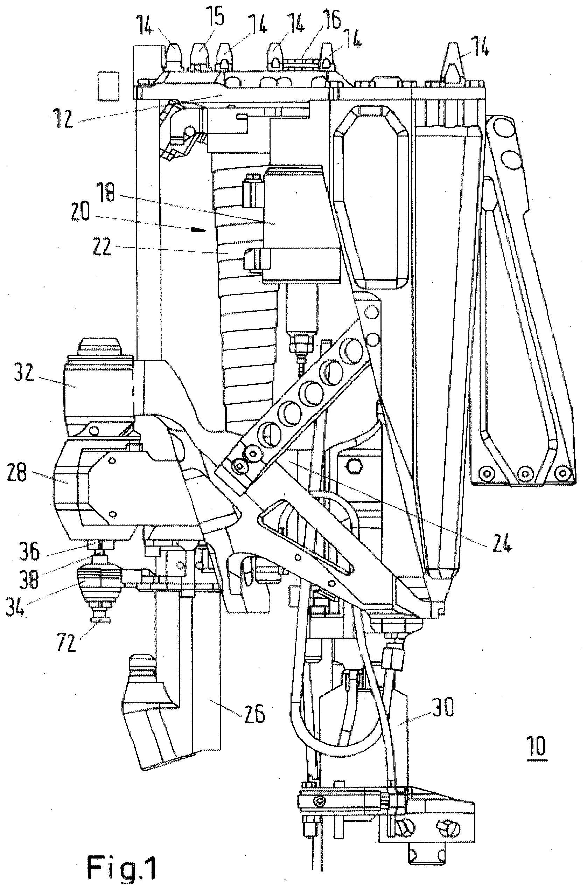

Fig. 1 zeigt das Beispiel eines Bohrgerätes 10, das für das Bearbeiten von Rohren in Wärmetauscher ausgelegt ist. Wärmetauscher in Kernkraftwerken zum Beispiel Dampferzeuger und Rohrwärmetauscher, bei denen üblicherweise ein Bündel von Einzelrohren in wenigstens zwei Rohrböden gehalten ist. Das Bohrgerät 10 kann alle Werkzeuge aufnehmen, die durch die Drehbewegung einer Welle angetrieben werden, also zum Beispiel Fräser oder Bohrer. Das Bohrgerät 10 weist eine Halteplatte 12 auf, wobei auf deren erster Seite eine Anzahl von Anschlagnoppen 14 angeordnet sind. Die erste Seite weist dabei zu einem Rohrboden des zu bearbeiteten Wärmetauschers bzw. Rohrbodens, der jedoch nicht in der Figur dargestellt ist. Das Bohrgerät 10 wird an den Rohrboden herangebracht, sodass die Anschlagnoppen 14 diesen berühren. Das geschieht zum Beispiel durch den Einsatz eines entsprechend ausgestalteten Roboters. Das Bohrgerät 10 wird mit dem Rohrboden verbunden, in dem wenigstens zwei Klemmelemente 16 in eine entsprechende Anzahl von Rohren im Rohrboden einfahren und dort verklemmt werden. Von den Klemmelementen 16 ist in der Figur nur eines gezeigt und zwar in einer Transportposition. Ein Klemmelementantrieb 18 ermöglicht es, dass das dem Antrieb zugeordnete Klemmelement 16 in Richtung Rohrboden, senkrecht zur ersten Seite bewegbar ist. Dazu hat die Halteplatte 12 eine Ausnehmung, durch die das Klimmelement 16 bedarfsweise durchgreift und zwar so weit über die Anschlagsnoppen 14 hinaus, dass sie in ein Rohr des Rohrbodens einfahren. Anschließend wird mit dem Klemmelementantrieb 18 das jeweilige im Rohr befindliche Klemmelement 16 mit einer Rohrwand verspannt, indem der sich im Rohr befindliche Teil des Klemmelements 16 gespreizt wird. Auf der ersten Seite ist zudem ein Detektor 15 angeordnet, der die gleiche Länge wie die Anschlagsnoppen 14 aufweist. Sollte sich aus irgendeinem Grund die Lage der Halteplatte 12 relativ zum Rohrboden ändern, beispielsweise weil eines der Klimmelemente 16 in seinem Rohr durch Vibrationen bei der Bearbeitung verrutscht, wird diese Zustandsänderung vom Detektor 15 erfasst und ein ansprechendes Signal an eine Steuerung des Bohrgeräts 10 übermittelt. Der Detektor 15 ist in einer besonders robusten Ausgestaltung als Endschalter ausgeführt.

Auf einer zweiten Seite der Halteplatte 12 weist das Bohrgerät 10 eine Spindel 20 auf, die durch eine Spindelverkleidung 22 in dieser Ansicht verdeckt ist. Die Spindel 20 weist an ihrem einen Ende ein Lager auf, das auf der zweiten Seite angeordnet ist. Die Spindel 20 greift durch ein Getriebe 24 durch, wobei auf der von der Halteplatte 12 abgewandten Seite des Getriebes 24 ein Spindelantrieb 26 mit einem Gehäuse des Getriebes 24 verbunden ist. Ein Hydraulikantrieb 30 treibt eine Antriebswelle des Getriebes 24 an, wobei auf dessen Abtriebsseite ein Auslegergetriebe 28 mit dem Getriebe 24 verbunden ist. Die Antriebswelle des Auslegergetriebes 28 ist dafür ausgebildet, einen Pendelhalter 32 auf der zur Halteplatte 12 weisenden Seite der Antriebswelle aufzunehmen und anzutreiben. Der Pendelhalter 32 ist ein Ausgleichswerkzeugfutter, das eine Verbindung mit dem Bearbeitungswerkzeug, beispielsweise dem Fräser, gewährleistet und zugleich bei eventuellen Winkel- oder Positionsfehlern des Werkzeuges ausgleichend und/oder selbst zentrierend wirkt. Auf der anderen Seite der Antriebswelle ist eine Entriegelungsvorrichtung 34 angeordnet, die mit einem Gehäuse des Spindelantriebs 26 verbunden ist, wobei die Antriebswelle eine Verriegelungseinheit 36 eingeschraubt ist, die einen Verriegelungsdorn 38 aufweist. Der Verriegelungsdorn 38 greift durch die Entriegelungsvorrichtung 34 durch und ist an dessen Ende mit einer Ziehkappe 72 versehen. Die Entriegelungsvorrichtung 34 hat die Aufgabe, im Falle, dass der Pendelhalter 32 dem Auslegergetriebe 28 entnommen werden soll, den Verriegelungsdorn 38 in Richtung weg von der Halteplatte 12 zu bewegen und damit den Pendelhalter 32 zu entriegeln. Der kann dann zum Beispiel mit einem Greifwerkzeug, das auch an einer Stange als Greifwerkzeughalter anbringbar ist, dem Auslegergetriebe entnommen werden und ein anderes Werkzeugfutter mit einem anderen Werkzeug wiederum in das Auslegergetriebe 28 eingesetzt werden. Auf diese Weise erfolgt ein vergleichsweise schneller Werkzeugwechsel. Das Personal wird keiner oder einer entsprechend geringeren Strahlenbelastung ausgesetzt. Das Werkzeug wird in diesem Fall jeweils zusammen mit einem Werkzeugfutter gewechselt.

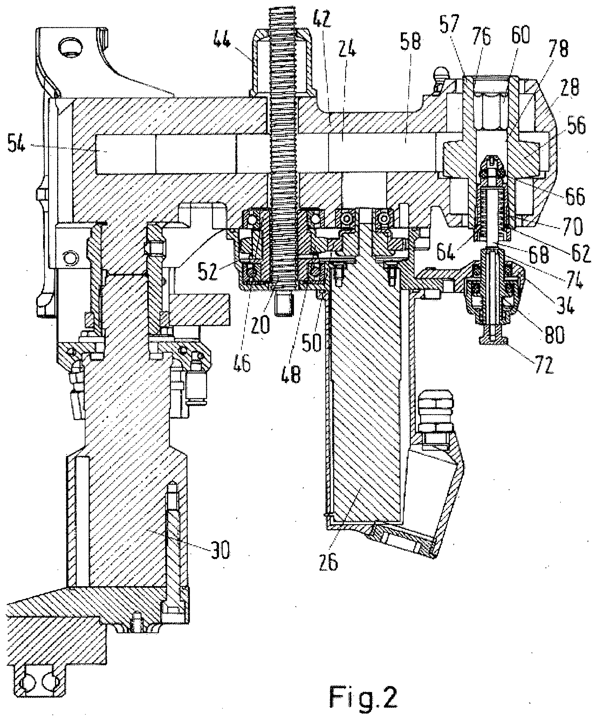

Fig. 2 zeigt ein Schnittbild durch einen Teil des Bohrgeräts 10. Daher sind die Bezugszeichen zu den technischen Bauelementen die bereits in Figur 1 eingeführt wurden in diese Figur übernommen. Das Getriebe 24 weist fünf Zahnräder auf, die jedoch nicht im Einzelnen dargestellt sind. Das mittlere der Zahnräder sowie eine Getriebegehäuse 42 des Getriebes 24 weisen Ausnehmungen auf, durch die die Spindel 20 durchgeführt ist. Ein Spindelgehäuse 44 ist an dem Getriebegehäuse 42 angebracht und auf der zum Spindelantrieb 26 weisenden Seite ist der Spindel 20, die als Gewindespindel ausgeführt ist, eine Spindelmutter 46 aufgeschraubt, die mit einem ersten Zahnrad 48 verbunden ist. Das erste Zahnrad 48 wird von einem zweiten Zahnrad 50 angetrieben, dass auf der Welle des Spindelantriebs 26 angeordnet und von diesem angetrieben ist. Die Spindelmutter 46 ist in einem Muttergehäuse 52 angeordnet und mit dem Getriebegehäuse 42 verbunden. Wenn der Spindelantrieb 26 aktiviert ist und sich die Spindelmutter 46 auf diese Weise dreht, wird das Getriebe 24 zusammen mit all seinen verbundenen Teil entsprechend der Drehrichtung auf die Halteplatte 12 zu- oder wegbewegt. Auch der Spindelantrieb 26 ist von der Steuerung steuerbar. Auf diese Weise ist eine Vorschubeinheit realisiert.

Der Hydraulikantrieb 30 ist mit einer Antriebsseite 54 des Getriebes 24 verbunden. Im Auslegergetriebe 28 ist ein Abtriebszahnrad 56 angeordnet, das von einer Abtriebsseite 58 des Getriebes 24 angetrieben ist und an eine Abtriebswelle 57 an geformt ist. Das Abtriebszahnrad 56 weist zentrisch eine Bohrung auf, die auf der zur Halteplatte 12 weisenden Stirnseite zu einer innensechskantförmigen Ausnehmung 60 erweitert ist und auf der anderen Stirnseite ein Innengewinde hat. Dieses Innengewinde ist eine Verriegelungseinheit 62 eingeschraubt, die eine Verriegelungshülse 64 aufweist, in der weitere Ausnehmungen vorhanden sind, in denen je eine Kugel angeordnet sind. Ein Verriegelungsbolzen 68 ist durch eine Druckfeder 70 in Richtung Halteplatte 12 gedrückt, wobei der Verriegelungsbolzen 68 so ausgestaltet ist, dass er dabei die Kugeln 66 radial nach außen drückt. Die Entriegelungsvorrichtung 34 ist dabei auf der von der Halteplatte 12 abgewandten Seite so weit von dem Auslegergetriebe 28 beanstandet, dass die Verriegelungshülse 64 gerade nicht berührt wird. Der Verriegelungsbolzen 68 weist eine Länge auf, die so verbissen ist, dass er durch die Entriegelungsvorrichtung 34 durchgeführt ist und an seinem freien Ende mit einer Ziehkappe 72 mittels einer Schraubverbindung verbunden ist. In der Entriegelungsvorrichtung 34 ist ein Ziehkolben 74 angeordnet, durch den der Verriegelungsbolzen 68 umschlossen ist. Dabei ist eine Innenbohrung des Ziehkolbens 74 so auf den Durchmesser des Verriegelungsbolzens 68 angepasst, dass eine Berührung der beiden Bauelemente im Betriebszustand vermieden ist. Mit Betriebszustand ist der Zustand des Bohrgeräts 10 gemeint, wenn der Hydraulikantrieb 30 läuft und damit die Abtriebswelle 57 angetrieben ist.

Die Verriegelung eines Werkzeugfutters bzw. dessen Entriegelung in der Abtriebswelle 57 im Folgenden näher erläutert. Die Figur 2 zeigt die Abtriebswelle 57 ohne ein Werkzeugfutter und weist an seiner zentrisch gelegenen Ausnehmung einen ersten 76 und einen zweiten Abschnitt 78 mit unterschiedlichen Durchmessern auf. Die Abschnitte 76, 78 sind dabei so weit voneinander beanstandet, dass eine hohe Rundlaufgenauigkeit erzielt wird und dabei ein vergleichsweise geringes Spiel erreicht ist. Durch die innensechskantförmige Ausnehmung 60 werden die Drehmomente der Abtriebswelle 57 auf das Werkzeugfutter und damit auf das Werkzeug übertragen. Wenn das Werkzeugfutter mit der Abtriebswelle 57 verriegelt ist, sind die Kugeln 66 von der Verriegelungseinheit 62 in einer dafür angepassten Nut des Werkzeugfutters eingedrückt. Auf diese Weise ist das Werkzeugfutter in axialer Richtung zur Abtriebswelle 57 fixiert. Zum Entriegeln bzw. Lösen des Werkzeugfutters wird der Antrieb der Abtriebswelle 57 abgeschaltet und sich der Ziehkolben 74 entgegen einer Federkraft einer Feder 80 bewegt, sodass dieser an der Ziehkappe 72 anliegt und diese zusammen mit dem Verriegelungsbolzen 68 mit bewegt. Der Ziehkolben 74 wird dabei durch einen hydraulischen, pneumatischen oder elektrischen Antrieb angetrieben. Der Verriegelungsbolzen 68 wird dabei so weit bewegt, dass Kugeln 66 in die entsprechenden Ausnehmungen der Verriegelungsbolzen 64 zurückgleiten. Dazu ist das zu den Kugeln 66 weisende Ende des Verriegelungsbolzens 64 konusförmig ausgestaltet, wobei die Ausgestaltung auch mehrere Konusse unterschiedlicher Steigung aufweisen können. Auf diese Weise ist das hinein- oder hinausgleiten der Kugeln 66 in die oder aus den Ausnehmungen besonders gut gewährleistet. Sind die Kugeln 66 in ihren Ausnehmungen in der Verriegelungsbolzen 64 positioniert, ist das Werkzeugfutter entriegelt bzw. gelöst und ist der Abtriebswelle 57 entnehmbar. Soll ein anderes Werkzeugfutter, beispielsweise ein Pendelhalter mit der Abtriebswelle 57 verbunden werden, wird dieser in die Abtriebswelle 57 gesteckt und der Antrieb des Ziehkolbens 74 abgeschaltet. Die Federkraft der Feder 80 drückt den Ziehkolben 74 dabei wieder in seine Ausgangslage. Auf diese Weise ist der Verriegelungsbolzen 68 wieder freigegeben und wird durch die Federkraft der Druckfeder 70 wiederum in Richtung Halteplatte 12 gedrückt. Dabei werden die Kugeln 66 durch das kugelförmige Ende des Verriegelungsbolzens 74 in eine entsprechende Nut des Pendelhalters gedrückt, sodass dieser nunmehr mit der Abtriebswelle 57 verriegelt ist.

### Bezuqszeichenliste

- 10: Bohrgerät
- 12: Halteplatte
- 14: Anschlagsnoppen
- 15: Detektor
- 16: Klemmelemente
- 18: Klemmelementantrieb
- 20: Spindel
- 22: Spindelverkleidung
- 24: Getriebe
- 26: Spindelantrieb
- 28: Auslegergetriebe
- 30: Hydraulikantrieb
- 32: Pendelhalter
- 34: Entriegelungsvorrichtung
- 36: Verriegelungseinheit
- 38: Verriegelungsdorn
- 42: Getriebegehäuse
- 44: Spindelgehäuse
- 46: Spindelmutter
- 48: erstes Zahnrad
- 50: zweites Zahnrad
- 52: Muttergehäuse
- 54: Antriebseite
- 56: Abtriebszahnrad
- 57: Abtriebswelle
- 58: Abtriebsseite
- 60: innensechskantförmige Ausnehmung
- 62: Verriegelungseinheit
- 64: Verriegelungshülse
- 66: Kugeln
- 68: Verriegelungsbolzen
- 70: Druckfeder
- 72: Ziehkappe
- 74: Ziehkolben
- 76: erster Abschnitt
- 78: zweiter Abschnitt
- 80: Feder

## Patentansprüche

1. Bohrvorrichtung (10) für das Bearbeiten von Rohren an Rohrböden von Wärmetauschern in radioaktiver Umgebung, wobei die Bohrvorrichtung eine Halteplatte (12), einen ersten Antrieb (30), eine Werkzeugwelle (57) und eine Vorschubvorrichtung (24, 26) aufweist, wobei auf einer zweiten Seite der Halteplatte (12) der erste Antrieb (30) angeordnet ist, der die Werkzeugwelle (57) antreibt, wobei mit der Vorschubvorrichtung (24, 26) ein Vorschub der Werkzeugwelle (57) bewirkt ist, wobei die Halteplatte (12) auf einer ersten Seite mit wenigstens zwei Haltefingern (16) in den Rohren verklemmbar ist, **dadurch gekennzeichnet, dass** ein Werkzeugfutter an einer ersten Stirnseite der Werkzeugwelle (57) mit dieser lösbar verbunden ist, dass mit einem Entriegelungsgerät (34, 36, 38) der Bohrvorrichtung das Werkzeugfutter von der Werkzeugwelle (57) entriegelbar ist, und dass das Entriegelungsgerät (34, 36, 38) mit einer Fernbedienvorrichtung steuerbar ist.

2. Bohrvorrichtung nach Anspruch 1, **dadurch gekennzeichnet, dass** auf der ersten Seite Distanzelemente (14) angeordnet sind.

3. Bohrvorrichtung nach Anspruch 1 oder 2, **dadurch gekennzeichnet, dass** auf der ersten Seite ein Detektor (15), insbesondere ein Endschalter, angeordnet ist, mit dem eine Lageveränderung der Halteplatte 12 relativ zu einem Rohrboden feststellbar ist.

4. Bohrvorrichtung nach einem der vorgenannten Ansprüche, **dadurch gekennzeichnet, dass** das Entriegelungsgerät (34, 36, 38) eine Entriegelungsvorrichtung (34), ein Betätigungselement (38) und eine Betätigungsvorrichtung (36) aufweist, dass an einer zweiten Stirnseite der Antriebswelle (57) die Verriegelungsvorrichtung 36 zumindest teilweise in der Antriebswelle (57) angeordnet und mit dieser verbunden ist, dass das Betätigungselement (38) durch die Entriegelungsvorrichtung (34) geführt ist, dass das Betätigungselement (38) von einer Betätigungsvorrichtung (36) von einer Verriegelungsposition zumindest zeitweise in eine Entriegelungsposition verbringbar ist und dass das Werkzeugfutter in der Verriegelungsposition von der Werkzeugwelle (57) angetrieben ist.

5. Bohrvorrichtung nach Anspruch 4, **dadurch gekennzeichnet, dass** die Verriegelungsvorrichtung (36) ein Federelement (70) aufweist, durch dessen Federkräfte das Betätigungselement (38) in der Verriegelungsposition gehalten ist.

6. Bohrvorrichtung nach Anspruch 4 oder 5, **dadurch gekennzeichnet, dass** durch das Betätigungselement (38) in der Verriegelungsposition mehrere Kugeln (66) in einer Nut des Werkzeugfutters gehalten sind und dass durch die Kugeln (66) das Werkzeugfutter in axialer Richtung fixiert ist.

7. Bohrvorrichtung nach einem der vorgenannten Ansprüche 4 bis 6, **dadurch gekennzeichnet, dass** das Betätigungselement (38) ein Betätigungsbolzen (68) ist, der eine Kappe (72) aufweist, dass ein Entriegelungselement (74) der Betätigungsvorrichtung (34) zum Entriegeln mit der Kappe (72) zusammenarbeitet, sodass die Kappe (72) zusammen dem mit dem Betätigungsbolzen in axialer Richtung der Werkzeugwelle (57) bewegt ist.

8. Bohrvorrichtung nach Anspruch 7, **dadurch gekennzeichnet, dass** das Entriegelungselement (74) als Hohlzylinder ausgestaltet ist, durch den der Betätigungsbolzen (68) durchgreift, und dass die Maße des Betätigungsbolzens (68) so auf das Entriegelungselement (74) abgestimmt sind, dass Betätigungsbolzen (68) und Hohlzylinder in der Verriegelungsposition berührungsfrei sind.

9. Bohrvorrichtung nach Anspruch 8, **dadurch gekennzeichnet, dass** die Betätigungsvorrichtung (36) ein weiteres Federelement (80) aufweist, das auf den Entriegelungszylinder (74) wirkt, sodass dessen Federkraft den Entriegelungszylinder (74) in der Verriegelungsposition hält.

10. Bohrvorrichtung nach einem der vorgenannten Ansprüche, **dadurch gekennzeichnet, dass** die Werkzeugwelle (57) als Hohlwelle ausgebildet ist.

11. Bohrvorrichtung nach einem der vorgenannten Ansprüche, **dadurch gekennzeichnet, dass** das zwischen erstem Antrieb (30) und Werkzeugwelle (57) ein Getriebe (24) zwischengeschaltet ist

12. Bohrvorrichtung nach einem der vorgenannten Ansprüche, **dadurch gekennzeichnet, dass** die Vorschubvorrichtung eine Gewindespindel (20) aufweist, auf eine Mutter (46) mit einem Zahnrad (48) mit einem auf die Gewindespindel (20) angepasstem Gewinde geführt ist, und dass durch einen zweiten Antrieb (26) das Zahnrad (48) angetrieben ist.

13. Bohrvorrichtung nach einem der vorgenannten Ansprüche, **dadurch gekennzeichnet, dass** eine Steuerungsvorrichtung mit dem ersten Antrieb (26) und/oder mit der Vorschubvorrichtung und/oder mit dem Entriegelungsgerätes (34, 36, 38) verbunden ist.

## Claims

1. Drilling device (10) for machining tubes on tube sheets of heat exchangers in a radioactive environment, wherein the drilling device has a retaining plate (12), a first drive (30), a tool shaft (57) and a feed device (24, 26), wherein the first drive (30), which drives the tool shaft (57), is arranged on a second side of the retaining plate (12), wherein a forward feed of the tool shaft (57) is brought about by the feed device (24, 26), wherein the retaining plate (12) is clampable in the tubes with at least two retaining fingers (16) on a first side, **characterized in that** a tool chuck on a first end side of the tool shaft (57) is connected detachably to the latter, **in that** the tool chuck is unlockable from the tool shaft (57) by way of an unlocking instrument (34, 36, 38) of the drilling device, and **in that** the unlocking instrument (34, 36, 38) is controllable by a remote-control device.

2. Drilling device according to Claim 1, **characterized in that** spacer elements (14) are arranged on the first side.

3. Drilling device according to Claim 1 or 2, **characterized in that** a detector (15), in particular a limit switch, with which a change in position of the retaining plate (12) relative to a tube sheet is able to be ascertained, is arranged on the first side.

4. Drilling device according to one of the preceding claims, **characterized in that** the unlocking instrument (34, 36, 38) has an unlocking device (34), an actuating element (38) and an actuating device (36), **in that**, on a second end side of the driveshaft (57), the locking device (36) is arranged at least partially in the driveshaft (57) and connected thereto, **in that** the actuating element (38) is guided by the unlocking device (34), **in that** the actuating element (38) is movable at least temporarily into an unlocking position from a locking position by an actuating device (36), and **in that** the tool chuck is driven by the tool shaft (57) in the locking position.

5. Drilling device according to Claim 4, **characterized in that** the locking device (36) has a spring element (70), the spring forces of which retain the actuating element (38) in the locking position.

6. Drilling device according to Claim 4 or 5, **characterized in that** a plurality of balls (66) are retained in a groove of the tool chuck by the actuating element (38) in the locking position, and **in that** the tool chuck is fixed in an axial direction by the balls (66) .

7. Drilling device according to one of the preceding Claims 4 to 6, **characterized in that** the actuating element (38) is an actuating pin (68) that has a cap (72), and **in that** an unlocking element (74) of the actuating device (34) cooperates with the cap (72) for unlocking, such that the cap (72) is moved together with the actuating pin in an axial direction of the tool shaft (57).

8. Drilling device according to Claim 7, **characterized in that** the unlocking element (74) is configured as a hollow cylinder through which the actuating pin (68) engages, and **in that** the dimensions of the actuating pin (68) are coordinated with the unlocking element (74) such that the actuating pin (68) and hollow cylinder are not in contact in the locking position.

9. Drilling device according to Claim 8, **characterized in that** the actuating device (36) has a further spring element (80), which acts on the unlocking cylinder (74) such that the spring force thereof retains the unlocking cylinder (74) in the locking position.

10. Drilling device according to one of the preceding claims, **characterized in that** the tool shaft (57) is in the form of a hollow shaft.

11. Drilling device according to one of the preceding claims, **characterized in that** a transmission (24) is interposed between the first drive (30) and the tool shaft (57).

12. Drilling device according to one of the preceding claims, **characterized in that** the feed device has a threaded spindle (20), on which a nut (46) with a gearwheel (48) having a thread adapted to the threaded spindle (20) is guided, and **in that** the gearwheel (48) is driven by a second drive (26).

13. Drilling device according to one of the preceding claims, **characterized in that** a control device is connected to the first drive (26) and/or to the feed device and/or to the unlocking instrument (34, 36, 38).

## Revendications

1. Dispositif d'alésage (10) pour l'usinage de tubes sur des plaques tubulaires d'échangeurs de chaleur dans un environnement radioactif, le dispositif d'alésage comprenant une plaque de maintien (12), un premier entraînement (30), un arbre d'outil (57) et un dispositif d'avancement (24, 26), le premier entraînement (30), qui entraîne l'arbre d'outil (57), étant agencé sur un deuxième côté de la plaque de maintien (12), le dispositif d'avancement (24, 26) réalisant un avancement de l'arbre d'outil (57), la plaque de maintien (12) pouvant être serrée dans les tubes sur un premier côté avec au moins deux doigts de maintien (16), **caractérisé en ce qu'**un mandrin d'outil sur un premier côté frontal de l'arbre d'outil (57) est relié de manière amovible avec celui-ci, **en ce qu'**avec un appareil de déverrouillage (34, 36, 38) du dispositif d'alésage, le mandrin d'outil peut être déverrouillé de l'arbre d'outil (57), et **en ce que** l'appareil de déverrouillage (34, 36, 38) peut être commandé avec un dispositif de commande à distance.

2. Dispositif d'alésage selon la revendication 1, **caractérisé en ce que** des éléments de distanciation (14) sont agencés sur le premier côté.

3. Dispositif d'alésage selon la revendication 1 ou 2, **caractérisé en ce qu'**un détecteur (15), notamment un interrupteur de fin de course, est agencé sur le premier côté, avec lequel une modification de situation de la plaque de maintien (12) par rapport à une plaque tubulaire peut être détectée.

4. Dispositif d'alésage selon l'une quelconque des revendications précédentes, **caractérisé en ce que** l'appareil de déverrouillage (34, 36, 38) comprend un dispositif de déverrouillage (34), un élément d'actionnement (38) et un dispositif d'actionnement (36), **en ce que**, sur un deuxième côté frontal de l'arbre d'entraînement (57), le dispositif de verrouillage (36) est agencé au moins partiellement dans l'arbre d'entraînement (57) et relié avec celui-ci, **en ce que** l'élément d'actionnement (38) est acheminé au travers du dispositif de déverrouillage (34), **en ce que** l'élément d'actionnement (38) peut être amené par un dispositif d'actionnement (36) depuis une position de verrouillage au moins temporairement dans une position de déverrouillage, et **en ce que** le mandrin d'outil est entraîné par l'arbre d'outil (57) dans la position de verrouillage.

5. Dispositif d'alésage selon la revendication 4, **caractérisé en ce que** le dispositif de verrouillage (36) comprend un élément à ressort (70), par les forces de ressort duquel l'élément d'actionnement (38) est maintenu dans la position de verrouillage.

6. Dispositif d'alésage selon la revendication 4 ou 5, **caractérisé en ce que** plusieurs billes (66) sont maintenues dans une rainure du mandrin d'outil par l'élément d'actionnement (38) dans la position de verrouillage et **en ce que** le mandrin d'outil est fixé dans la direction axiale par les billes (66).

7. Dispositif d'alésage selon l'une quelconque des revendications 4 à 6 précédentes, **caractérisé en ce que** l'élément d'actionnement (38) est un boulon d'actionnement (68), qui comprend un couvercle (72), **en ce qu'**un élément de déverrouillage (74) du dispositif d'actionnement (34) coopère pour le déverrouillage avec le couvercle (72), de telle sorte que le couvercle (72) soit déplacé conjointement avec le boulon d'actionnement dans la direction axiale de l'arbre d'outil (57).

8. Dispositif d'alésage selon la revendication 7, **caractérisé en ce que** l'élément de déverrouillage (74) est configuré sous la forme d'un cylindre creux, au travers duquel le boulon d'actionnement (68) entre en prise, et **en ce que** les dimensions du boulon d'actionnement (68) sont accordées à l'élément de déverrouillage (74) de telle sorte que le boulon d'actionnement (68) et le cylindre creux ne soient pas en contact dans la position de verrouillage.

9. Dispositif d'alésage selon la revendication 8, **caractérisé en ce que** le dispositif d'actionnement (36) comprend un élément à ressort supplémentaire (80), qui agit sur le cylindre de déverrouillage (74), de telle sorte que sa force de ressort maintienne le cylindre de déverrouillage (74) dans la position de verrouillage.

10. Dispositif d'alésage selon l'une quelconque des revendications précédentes, **caractérisé en ce que** l'arbre d'outil (57) est configuré sous la forme d'un arbre creux.

11. Dispositif d'alésage selon l'une quelconque des revendications précédentes, **caractérisé en ce qu'**une transmission (24) est intercalée entre le premier entraînement (30) et l'arbre d'outil (57).

12. Dispositif d'alésage selon l'une quelconque des revendications précédentes, **caractérisé en ce que** le dispositif d'avancement comprend une broche filetée (20), est acheminé sur un écrou (46) avec une roue dentée (48) ayant un filetage adapté à la broche filetée (20), et **en ce que** la roue dentée (48) est entraînée par un deuxième entraînement (26).

13. Dispositif d'alésage selon l'une quelconque des revendications précédentes, **caractérisé en ce qu'**un dispositif de commande est relié avec le premier entraînement (26) et/ou avec le dispositif d'avancement et/ou avec l'appareil de déverrouillage (34, 36, 38).
